# EUROPEAN PATENT SPECIFICATION

(11) **EP 1 567 384 B1**
(45) Date of publication and mention of the grant of the patent: **09.05.2007**
(21) Application number: 03810724.9
(22) Date of filing: 08.09.2003
(51) Int. Cl.: B60K 17/28, B60W 10/02, F16H 63/40

(54) **AN AUTOMATIC ENGAGING/DISENGAGING METHOD AND A DEVICE FOR CONTROLLING A COUPLING-DEPENDENT POWER TAKE-OFF**
AUTOMATISCHESEINRÜCK-/AUSRÜCKVERFAHREN UND VORRICHTUNG ZUR STEUERUNG EINER KUPPLUNGSABHÄNGIGENZAPFWELLE
PROCEDE ET SYSTEME D'ENGAGEMENT/DESENGAGEMENT AUTOMATIQUE POUR COMMANDE DE PRISE DE FORCE A ACCOUPLEMENT

(30) Priority: 07.11.2002 SE 0203305
(43) Date of publication of application: 31.08.2005
(73) Proprietor: VOLVO LASTVAGNAR AB, 405 08 Göteborg (SE)
(72) Inventor: STEEN, Marcus, S-424 33 Angered (SE); KARLSSON, Svante, S-426 53 Västra Frölunda (SE); LAURI, Erik, S-431 59 Mölndal (SE)
(74) Representative: Fröhling, Werner Otto
(86) International application number: PCT/SE2003/001388
(87) International publication number: WO 2004/041576

(56) References cited:
- DE-A1- 10 059 708
- US-A- 5 299 129
- US-A- 5 611 751
- US-A- 6 080 081

## Description

### TECHNICAL FIELD OF THE INVENTION

The present invention relates to a method for motor vehicles according to the preamble of patent claims 1 and 6 below. The method relates to an automatic engaging/disengaging method for a coupling-dependent power take-off when the vehicle is in motion.

### STATE OF THE ART

In order for it to be possible to handle the load on a truck effectively, load-handling equipment is necessary. The commonest examples of such equipment are tipping gear and cranes. Also common are hook loaders, refuse-handling units, rotating cement mixers, flushing units and air compressors for loading or unloading bulk loads.

In order to utilize the driving power of the vehicle engine to drive the load-handling equipment as well, a power take-off is required. The driving power from the power take-off can be transmitted either mechanically via a propeller shaft or belts or hydraulically by a hydraulic pump being mounted on the power take-off.

Power take-offs are divided into coupling-independent and coupling-dependent power take-offs. Coupling-dependent power take-offs are preferably used when the vehicle is stationary. The coupling-dependent power take-offs are mounted on the gearbox and are usually driven by the intermediate shaft of the gearbox. This means that the power take-off is coupling-dependent, that is to say the power take-off stops when the disk clutch between the engine and gearbox of the vehicle is disengaged. Depending on whether or not the gearbox is equipped with a split gear, the ratio between the engine and the power take-off can be influenced.

Automatic gearboxes of the automated stage-geared gearbox type have become increasingly common in heavy-duty vehicles as microcomputer technology has developed further and made it possible, with a control computer and a number of actuators, for example servo motors, to precision-regulate engine speed, engagement and disengagement of an automated disk clutch between the engine and the gearbox and also the internal coupling means of the gearbox in such a way and in relation to one another so that gentle shifting is always obtained at the correct engine speed.

The advantage of this type of automatic gearbox compared with a conventional automatic gearbox constructed with planetary gear stages and with a hydrodynamic torque converter on the input side is on the one hand that, especially as far as use in heavy-duty vehicles is concerned, it is simpler and more robust and can be manufactured at a considerably lower cost than the conventional automatic gearbox and on the other hand that it has higher efficiency, which means lower fuel consumption is possible.

According to the known art for the abovementioned type of automated stage-geared gearbox, coupling-dependent power take-offs are suitable for load-handling equipment which is used when the vehicle is stationary or when the vehicle is driven in the starting gear, for example tipping units, cranes, hook loaders, pumps for emptying/filling from various containers and air compressors for loading or unloading bulk loads. As the power take-off loads the synchronization system when shifting takes place, it is not permitted for the power take-off to be engaged when shifts take place when the vehicle is being driven. The coupling-dependent power take-off is engaged when the vehicle is stationary and the disk clutch between the engine of the vehicle and the gearbox of the vehicle is disengaged. The gearbox is in its neutral position if the power take-off is to be used in a stationary vehicle or has a starting gear engaged if the power take-off is to be used during slow driving. When the disk clutch is engaged, the engine drives the power take-off, and the vehicle is driven in a starting gear if this is engaged. Disengagement of the power take-off is also effected when the vehicle is stationary and the disk clutch of the vehicle is disengaged.

US6080081 discloses an example of a method for engaging a power take off, according to state of the art. Here, the vehicle has to be in a stand still condition and the transmission must have been put in a neutral position before a power take off engagement can be initiated.

The driver of a vehicle with a coupling-dependent power take-off according to the state of the art is therefore limited to engaging and disengaging the power take-off only when the vehicle is stationary.

A need therefore exists in a vehicle equipped with a coupling-dependent power take-off and an automated stage-geared gearbox to simplify operations for the driver of the vehicle when he wishes to use the coupling-dependent power take-off of the vehicle.

### SUMMARY OF THE INVENTION

The solution of the problem according to the invention as far as the method according to the invention is concerned is described in patent claims 1 and 6. The other patent claims describe preferred embodiments and developments of the method according to the invention (claims 2 to 5, 7 to 11).

The method according to the invention describes an automatic engaging method and an automatic disengaging method for a coupling-dependent power take-off in a vehicle when the vehicle is in motion, which power take-off is driven by an engine, arranged in the vehicle, via an automated disk clutch which in turn is coupled to an automatic stage-geared gearbox in which a shaft for driving the power take-off is arranged. At least one control unit for controlling the gearbox, the disk clutch and the engine is arranged in the vehicle.

In the case of the engaging method, the invention is characterized by the steps:
- the control unit registers that engagement of the power take-off is requested;
- the control unit disengages the disk clutch and puts the gearbox in neutral position so that the intermediate shaft of the gearbox is disengaged from the driving wheels of the vehicle;
- the control unit engages the power take-off.

In the case of the disengaging method, the invention is characterized by the steps:
- the control unit registers that disengagement of the power take-off is requested;
- the control unit puts the gearbox in neutral position so that the intermediate shaft of the gearbox is disengaged from the driving wheels of the vehicle;
- the control unit disengages the disk clutch or puts a split gear in neutral position;
- the control unit disengages the power take-off.

The advantage of the engaging/disengaging method according to the invention is that it is possible to engage and disengage a coupling-dependent power take-off even while driving the vehicle and irrespective of the gear engaged. It is easier for different configurations of units to be driven by the power take-off to be installed in the vehicle. This also includes units which, according to the state of the art, have to be driven by a coupling-independent power take-off. It is therefore possible with the aid of the invention to drive all types of unit by means of the coupling-dependent power take-off. The engagement or disengagement itself of the power take-off takes place completely automatically.

In a first preferred embodiment of the engaging and disengaging method according to the invention, the control unit controls the output torque of the engine so that the input shaft of the gearbox becomes virtually torqueless before the control unit disengages the disk clutch. This method affords improved comfort.

In a second embodiment of the engaging method according to the invention, the control unit ensures that the rotational speed of the intermediate shaft is reduced before engagement of the power take-off takes place. The advantage of the method according to the invention is that the engaging/disengaging device of the power take-off is subjected to smaller stresses and in this way the life of the device is prolonged.

In a further preferred embodiment of the engaging and disengaging method according to the invention, the control unit measures the torque of the input shaft. The advantage of the method according to the invention is that the output torque of the engine and the extent of engagement of the disk clutch can be controlled more accurately.

In another preferred embodiment of the disengaging method according to the invention, the control unit measures the torque at the power unit. By measuring the torque at the power unit, the output torque of the engine can be controlled so that the main shaft of the gearbox becomes torqueless or virtually torqueless, and the stresses on the coupling devices for the gear concerned in the basic gearbox when these are disengaged, that is to say when the gearbox is put in neutral position and the intermediate shaft is disengaged from the driving wheels of the vehicle, are therefore minimized. In a case where the torque take-off of the power take-off is relatively great, the load on the coupling devices is so great that neutral position is not obtained unless the torque can be controlled so that the main shaft of the gearbox becomes torqueless.

Further embodiments of the invention emerge from the dependent patent claims.

### BRIEF DESCRIPTION OF THE DRAWINGS

The present invention will be described in greater detail below with reference to the accompanying drawings, which, for the purpose of exemplification, show further preferred embodiments of the invention and also the technical background.
Figure 1 shows a diagrammatic representation of an internal combustion engine with adjacent clutch and gearbox with a power take-off.
Figure 2 shows the clutch and the gearbox in Figure 1 on enlarged scale.

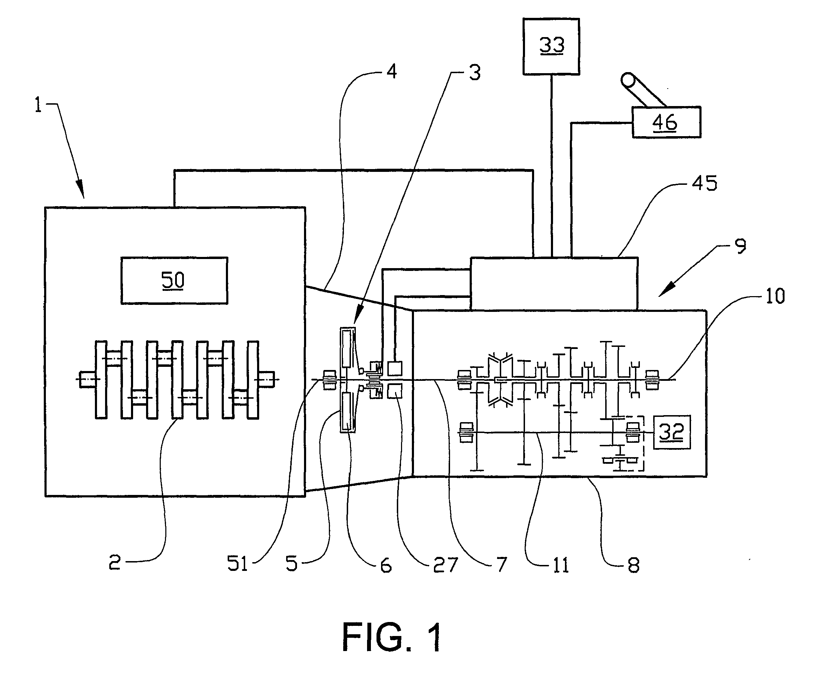

In Figure 1, reference number 1 designates a six-cylinder internal combustion engine, for example a diesel engine, the crankshaft 2 of which is coupled to a single-plate dry disk clutch, designated generally by reference number 3, which is enclosed in a clutch case 4. The crankshaft 2 is, via the output shaft 51 of the engine, which shaft is connected to the flywheel (not shown), connected non-rotatably to the clutch housing 5 of the clutch 3, while its plate 6 is connected non-rotatably to an input shaft 7 which is mounted rotatably in the casing 8 of a gearbox designated generally by reference number 9. A main shaft 10 and an intermediate shaft 11 are also mounted rotatably in the casing 8.

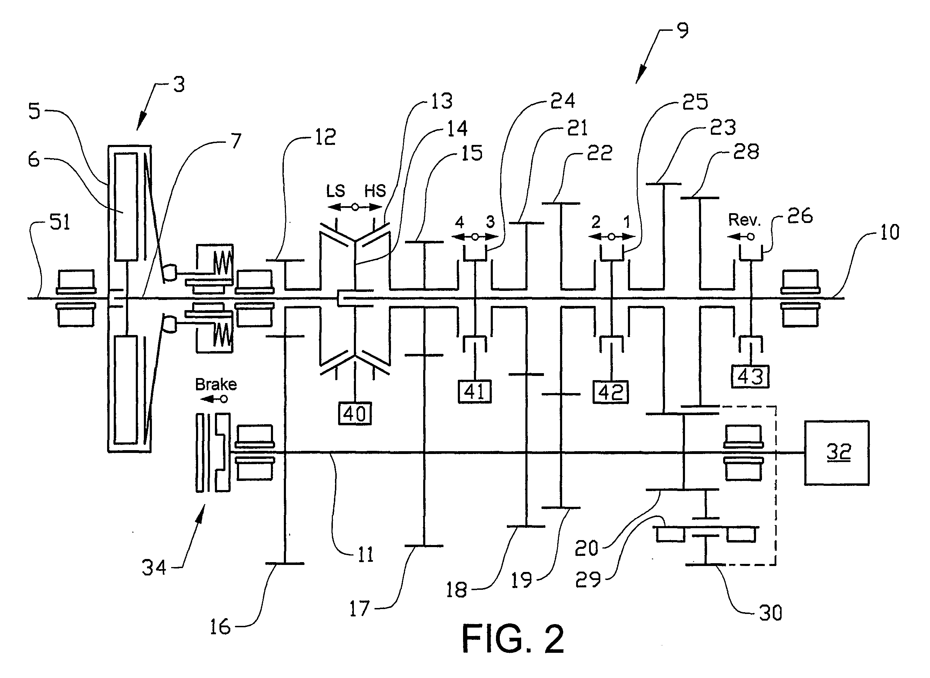

As can be seen most clearly from Figure 2, a gearwheel 12 is mounted rotatably on the input shaft 7 and is lockable on the shaft by means of a coupling sleeve 13 which is provided with synchronizing means and is mounted non-rotatably but axially displaceably on a hub 14 connected non-rotatably to the input shaft 7. By means of the coupling sleeve 13, a gearwheel 15 mounted rotatably on the main shaft 10 is also lockable relative to the input shaft 7. With the coupling sleeve 13 in a central position, both the gearwheels 12 and 15 are disengaged from their shafts 7 and, respectively, 10. The gearwheels 12 and 15 engage with gearwheels 16 and, respectively, 17 which are connected non-rotatably to the intermediate shaft 11. Arranged in a rotationally fixed manner on the intermediate shaft 11 are further gearwheels 18, 19 and 20 which engage with gearwheels 21, 22 and, respectively, 23 which are mounted rotatably on the main shaft 10 and are lockable on the main shaft by means of coupling sleeves 24 and, respectively, 25 which, in the illustrative embodiment shown, do not have synchronizing devices. A further gearwheel 28 is mounted rotatably on the main shaft 10 and engages with an intermediate gearwheel 30 which is mounted rotatably on a separate shaft 29 and in turn engages with the intermediate shaft gearwheel 20. The gearwheel 28 is lockable on its shaft by means of a coupling sleeve 26.

The gearwheel pairs 12, 16 and 15, 17 and the coupling sleeve 13 form a synchronized split gear with a low gear stage LS and a high gear stage HS. The gearwheel pair 15, 17 also forms, together with the gearwheel pairs 21, 18, 22, 19, 23, 20 and the three gearwheels 28, 20 and 30, a basic gearbox with four forward gears and one reverse gear. The output end of the main shaft 10 can be connected directly to a propeller shaft (not shown) which conveys the driving power out to the driving wheels (not shown). An alternative is for the output end of the main shaft 10 to be connected to a range gear stage (not shown) which in turn is connected to the propeller shaft.

The coupling sleeves 13, 24, 25 and 26 are displaceable as shown by the arrows in Figure 2, the gear stages shown in conjunction with the arrows being obtained. The coupling sleeves 13, 24, 25 each have three positions, two gear positions and a neutral position N (central position). The coupling sleeve 26 has one gear position and a neutral position N. The displacement of the coupling sleeves is brought about by respective servo devices 40, 41, 42 and 43 indicated diagrammatically in Figure 2, which can be pneumatically operated piston/cylinder arrangements of the type used in a gearbox of the type described above which is marketed under the name I-shift.

The servo devices 40, 41, 42 and 43 are controlled by an electronic control unit 45 (see Figure 1), comprising a microcomputer, depending on signals fed into the control unit representing various engine and vehicle data comprising at least engine speed, vehicle speed, throttle pedal position and, where appropriate, engine brake on/off, when an electronic gear selector 46 coupled to the control unit 45 is in its automatic shifting position. When the selector is in the position for manual shifting, shifting takes place at the command of the driver via the gear selector 46.

When shifting of the unsynchronized gears takes place, the speed is synchronized by precision control of the rotational speed of the engine 1. The disk clutch 3 is therefore engaged so that the rotational speed of the main shaft 10 and the rotational speed of the intermediate shaft 11 are adapted to a new ratio selected in the basic gearbox. The engine speed is regulated depending on the fuel quantity injected and the engine brake. The control unit 45 requests engine speed and/or engine torque from the engine control unit 50 which controls the fuel injection. When shifting of synchronized gears takes place, the speed adaptation is effected by means of synchronizing rings.

In Figures 1 and 2, reference number 32 designates a coupling-dependent power take-off coupled to the intermediate shaft 11. The power take-off usually consists of a housing mounted on the side or rear end wall of the gearbox. By means of an engaging and disengaging device (not shown), the input shaft (not shown) of the power take-off 32 can be connected in a rotationally fixed manner to the intermediate shaft 11. The engaging and disengaging device of the power take-off 32 is controlled by the control unit 45. The control unit 45 receives a request for engagement and disengagement of the power take-off 32 from a device 33 for controlling the power take-off 32, which device 33 is connected to the control unit 45. The device 33 may be a control which is operated by the driver of the vehicle or an automatic arrangement which, via some form of sensor for example, senses a parameter change, which initiates engagement or disengagement of the power take-off. When the power take-off 32 is engaged, it is therefore driven by the engine 1 via the disk clutch 3, the split gear 12, 16 or 15, 17 and also the intermediate shaft 11. The power take-off 32 is usually equipped with one or more gearing possibilities on the at least one output shaft (not shown) of the power take-off. A desired unit to be driven is coupled to the output shaft of the power take-off 32.

The method according to the invention makes possible engagement or disengagement of the power take-off when the vehicle is being driven. Therefore, the vehicle is in motion, a basic gear is engaged, and a split gear is engaged. In this vehicle state, the control unit 45 is, according to the invention, programmed so that, when the control unit 45 receives an input signal from the device 33 indicating that the power take-off 32 is to be engaged, the control unit 45 controls the engine torque so that the input shaft 7 of the gearbox 9 becomes torqueless or virtually torqueless.

When the input shaft 7 is torqueless or virtually torqueless, the control unit 45 disengages the disk clutch 3 and disengages the gear engaged in the basic gearbox so that the latter is in neutral position. The intermediate shaft 11 is therefore disengaged from the driving wheels of the vehicle. In an alternative embodiment, the gearbox can be equipped with a range gear stage (not shown) with a low gear position, a high gear position and a neutral position, which neutral position could alternatively be used in order to disengage the intermediate shaft 11 from the driving wheels. After disengagement of the intermediate shaft 11, the control unit 45 waits until the rotational speed of the intermediate shaft 11 has been reduced to a low speed, typically 30 rpm or less in speed difference between the rotational speed of the intermediate shaft and of the input shaft of the power take-off 32. The reduction in the rotational speed of the intermediate shaft 11 can be accelerated, for example by means of an intermediate shaft brake 34 (shown only in Figure 2) arranged on the intermediate shaft 11. The braking function of the intermediate shaft brake 34 is controlled by the control unit 45.

In the next step, the control unit 45 engages the power take-off 32 by means of the engaging and disengaging device (not shown) of the power take-off. The control unit 45 then adapts the reengagement of the disk clutch 3 at a low engine speed. If the engaging and disengaging device of the power take-off is of the claw coupling type, the disk clutch 3 is slipped in in such a way that any gear tooth against gear tooth situation in the claw coupling is eliminated. When the power take-off 32 is engaged, the disk clutch 3 is engaged fully, if appropriate via a torque control procedure.

According to an advantageous embodiment of the invention, the control unit 45 is programmed so as, after engagement of the power take-off 32, to select the previously engaged gear in the basic gearbox. Alternatively, the control unit can adapt the gear selection in the basic gearbox taking account of the power take-off 32 and/or taking account of equipment (not shown) driven by the power take-off 32 and also the current or future state of the vehicle in other respects. The speed of the engine 1 is adapted to the gear which has been selected before the gear is engaged. When the basic gearbox is engaged and the engine 1 can therefore continue to drive the vehicle in a selected direction of motion, the engine torque is controlled to the driving torque requested by the driver.

According to the invention, disengagement of the power take-off 32 takes place in a corresponding way by the control unit 45 first registering that disengagement via the device 33 is requested. The control unit 45 then controls the output torque of the engine 1 so that the main shaft 10 becomes torqueless or virtually torqueless. The main shaft 10 is torqueless when the torque from the engine 1 is the same as the torque which drives the power take-off 32 taking account of ratio. Measurement of the torque at the power take-off is therefore necessary. This is effected most easily by arranging a torque transmitter on the input shaft of the power unit or on the output end of the intermediate shaft toward the power unit. The control unit 45 then puts the basic gearbox in neutral position so that the intermediate shaft 11 of the gearbox is disengaged from the driving wheels of the vehicle. This can take place by means of all the gears in the basic gearbox being in neutral position or alternatively, as mentioned above, a range gear stage (not shown) being put in its neutral position. The engine 1 is then controlled, if possible, so that the torque on the input shaft 7 of the gearbox 9 becomes torqueless or virtually torqueless. The control unit 45 then disengages the intermediate shaft from the engine 1. This is effected by the disk clutch 3 being disengaged or alternatively the split gear part 12, 16, 15, 17 of the gearbox being put in its neutral position. When then the intermediate shaft 11 is completely disengaged from the engine 1 and driving wheels of the vehicle, the control unit 45 disengages the power take-off 32 by means of the engaging and disengaging device of the power take-off 32. For the next step, the control unit 45 can be programmed so that, if the split gear was in neutral position, the previously engaged split gear is selected or, if the disk clutch 3 was disengaged, the disk clutch 3 is engaged. The rotational speed of the engine is then controlled to synchronous speed with the selected gear in the basic gearbox. The control unit can be programmed so that the previous basic gear is selected or alternatively a new basic gear is selected along the current state of the vehicle, that is to say account can be taken of the fact that the power take-off is no longer engaged and/or of current or future vehicle speed and road topography. This can also apply to the selection of split gear and in the case of the engaging method for the power take-off. When the basic gearbox is engaged and the engine 1 can therefore continue to drive the vehicle in a selected direction of motion, the engine torque is controlled to the driving torque requested by the driver.

In another embodiment of the invention, a torque transmitter 27 is arranged on the input shaft 7 of the gearbox 9. By means of a torque transmitter 27 arranged on the input shaft 7, the control unit 45 can better control the output torque of the engine 1 and the extent of engagement of the disk clutch 3.

In an embodiment of the invention, the driver of the vehicle can advantageously be provided with feedback about the engaging/disengaging function of the power take-off by means of an indicator lamp and/or information on a display or another information device connected to the vehicle.

The invention can also be applied to gearboxes without a split gear part.

The invention can also be applied to gearboxes with one or more synchronized gears in the basic gearbox.

The invention is not to be considered as being limited to the illustrative embodiments described above, but a number of further variants and modifications are conceivable within the scope of the patent claims below.

## Claims

1. An automatic engaging method for a coupling-dependent power take-off (32) in a vehicle when the vehicle is in motion, which power take-off (32) is driven by an engine (1), arranged in the vehicle, via an automated disk clutch (3) which in turn is coupled to an automatic stage-geared gearbox (9) in which an intermediate shaft (11) for driving the power take-off (32) is arranged, where at least one control unit (45) controls the gearbox (9), the disk clutch (3) and the engine (1), the engaging method being **characterized by** the steps:
- the control unit (45) registers that engagement of the power take-off (32) is requested;
- the control unit (45) disengages the disk clutch (3) and puts the gearbox (9) in neutral position so that the intermediate shaft (11) of the gearbox (9) is disengaged from the driving wheels of the vehicle;
- the control unit (45) engages the power take-off (32).

2. The automatic engaging method as claimed in claim 1, where the method is further **characterized by** the step that, before the control unit (45) disengages the disk clutch (3), the control unit (45) controls the output torque of the engine (1) so that the input shaft (7) of the gearbox (9) becomes virtually torqueless.

3. The automatic engaging method as claimed in claim 2, where the method is further **characterized by** the step that the control unit (45) measures the torque of the input shaft (7).

4. The automatic engaging method as claimed in any one of the preceding claims, where the method is further **characterized by** the step that, before engagement of the power take-off (32) takes place, the control unit (45) ensures that the rotational speed of the intermediate shaft (11) is reduced.

5. The automatic engaging method as claimed in any one of the preceding claims, where the method is further **characterized by** the steps that, after engagement of the power take-off (32), the control unit (45) couples the disk clutch (3) together and engages a previously selected or a newly selected total ratio in the gearbox (9) after adaptation of the speed of the engine (1) to the selected gear.

6. An automatic disengaging method for a coupling-dependent power take-off (32) in a vehicle when the vehicle is in motion, which power take-off (32) is driven by an engine (1), arranged in the vehicle, via an automated disk clutch (3) which in turn is coupled to an automatic stage-geared gearbox (9) in which an intermediate shaft (11) for driving the power take-off (32) is arranged, where at least one control unit (45) controls the gearbox (9), the disk clutch (3) and the engine (1), the disengaging method being **characterized by** the steps:
- the control unit (45) registers that disengagement of the power take-off (32) is requested;
- the control unit (45) puts the gearbox (9) in neutral position so that the intermediate shaft (11) of the gearbox (9) is disengaged from the driving wheels of the vehicle;
- the control unit (45) disengages the disk clutch (3) or puts a split gear (12, 16, 15, 17) in neutral position;
- the control unit (45) disengages the power take-off (32).

7. The automatic disengaging method as claimed in claim 6, where the method is further **characterized by** the step that the control unit (45) measures the torque at the power unit (32).

8. The automatic disengaging method as claimed in one of claims 6 or 7, where the method is further **characterized by** the step that, before the control unit (45) puts the gearbox (9) in neutral position so that the intermediate shaft (11) of the gearbox (9) is disengaged from the driving wheels of the vehicle, the control unit (45) controls the output torque of the engine (1) so that the main shaft (10) of the gearbox (9) becomes torqueless or virtually torqueless.

9. The automatic disengaging method as claimed in any one of claims 6 to 8, where the method is further **characterized by** the step that, before the control unit (45) disengages the disk clutch (3) or puts a split gear (12, 16, 15, 17) in neutral position, the control unit (45) controls the speed of the engine (1) so that the input shaft (7) of the gearbox (9) becomes virtually torqueless.

10. The automatic disengaging method as claimed in any one of claims 6 to 9, where the method is further **characterized by** the step that, after disengagement of the power take-off (32), the control unit (45) couples the disk clutch (3) together or engages a split gear (12, 16, 15, 17) and engages a previously selected or a newly selected total ratio in the gearbox (9).

11. The automatic disengaging method as claimed in any one of claims 6 to 10, where the method is further **characterized by** the step that the control unit (45) measures the torque of the input shaft (7).

## Patentansprüche

1. Automatisches Einrückverfahren für einen kupplungsabhängigen Abtrieb (32) in einem Fahrzeug, wenn sich das Fahrzeug in Bewegung befindet, wobei der Abtrieb (32) von einem in dem Fahrzeug angeordneten Motor (1) über eine automatisch betriebene Scheibenkupplung (3) angetrieben wird, die ihrerseits mit einem automatischen Stufengetriebe (9) gekoppelt ist, in dem eine Zwischenwelle (11) für einen Antrieb des Abtriebs (32) angeordnet ist, wobei wenigstens eine Steuereinheit (45) das Getriebe (9), die Scheibenkupplung (3) und den Motor (1) steuert, wobei das Einrückverfahren durch die Schritte **gekennzeichnet** ist:
- die Steuereinheit (45) registriert, dass ein Einrücken des Abtriebs (32) angefordert wird,
- die Steuereinheit (45) rückt die Scheibenkupplung (3) aus und setzt das Getriebe (9) in eine neutrale Position, so dass die Zwischenwelle (11) des Getriebes (9) außer Eingriff mit den Antriebsrädern des Fahrzeugs kommt,
- die Steuereinheit (45) rückt den Abtrieb (32) ein.

2. Automatisches Einrückverfahren nach Anspruch 1, wobei das Verfahren weiter durch den Schritt **gekennzeichnet** ist, dass, bevor die Steuereinheit (45) die Scheibenkupplung (3) ausrückt, die Steuereinheit (45) das Ausgangsdrehmoment des Motors (1) so steuert, dass die Eingangswelle (7) des Getriebes (9) faktisch drehmomentlos wird.

3. Automatisches Einrückverfahren nach Anspruch 2, wobei das Verfahren weiter durch den Schritt **gekennzeichnet** ist, dass die Steuereinheit (45) das Drehmoment der Eingangswelle (7) misst.

4. Automatisches Einrückverfahren nach einem der vorhergehenden Ansprüche, wobei das Verfahren weiter durch den Schritt **gekennzeichnet** ist, dass, bevor das Einrücken des Abtriebs (32) stattfindet, die Steuereinheit (45) sicherstellt, dass die Drehzahl der Zwischenwelle (11) reduziert ist.

5. Automatisches Einrückverfahren nach einem der vorhergehenden Ansprüche, wobei das Verfahren weiter durch die Schritte **gekennzeichnet** ist, dass, nach dem Einrücken des Abtriebs (32), die Steuereinheit (45) die Scheibenkupplung (3) zusammenkoppelt und ein zuvor gewähltes oder neu gewähltes Gesamtübersetzungsverhältnis in dem Getriebe (9) nach Anpassung der Drehzahl des Motors (1) an den gewählten Gang einrückt.

6. Automatisches Ausrückverfahren für einen kupplungsabhängigen Abtrieb (32) in einem Fahrzeug, wenn sich das Fahrzeug in Bewegung befindet, wobei der Abtrieb (32) von einem in dem Fahrzeug angeordneten Motor (1) über eine automatisch betriebene Scheibenkupplung (3) angetrieben wird, die ihrerseits mit einem automatischen Stufengetriebe (9) gekoppelt ist, in dem eine Zwischenwelle (11) für einen Antrieb des Abtriebs (32) angeordnet ist, wobei wenigstens eine Steuereinheit (45) das Getriebe (9), die Scheibenkupplung (3) und den Motor (1) steuert, wobei das Ausrückverfahren durch die Schritte **gekennzeichnet** ist:
- die Steuereinheit (45) registriert, dass ein Ausrücken des Abtriebs (32) angefordert wird,
- die Steuereinheit (45) setzt das Getriebe (9) in eine neutrale Position, so dass die Zwischenwelle (11) des Getriebes (9) außer Eingriff mit den Antriebsrädern des Fahrzeugs kommt,
- die Steuereinheit (45) rückt die Scheibenkupplung (3) aus oder setzt ein Splitgetriebe (12, 16, 15, 17) in Neutralstellung,
- die Steuereinheit (45) rückt den Abtrieb (32) aus.

7. Automatisches Ausrückverfahren nach Anspruch 6, wobei das Verfahren weiter durch den Schritt **gekennzeichnet** ist, dass die Steuereinheit (45) das Drehmoment an der Leistungseinheit (32) misst.

8. Automatisches Einrückverfahren nach einem der Ansprüche 6 oder 7, wobei das Verfahren weiter durch den Schritt **gekennzeichnet** ist, dass, bevor die Steuereinheit (45) das Getriebe (9) in Neutralposition setzt, so dass die Zwischenwelle (11) des Getriebes (9) außer Eingriff mit den Antriebsrädern des Fahrzeugs kommt, die Steuereinheit (45) das Ausgangsdrehmoment des Motors (1) so steuert, dass die Hauptwelle (10) des Getriebes (9) drehmomentlos oder faktisch drehmomentlos wird.

9. Automatisches Ausrückverfahren nach einem der Ansprüche 6 bis 8, wobei das Verfahren außerdem durch den Schritt **gekennzeichnet** ist, dass, bevor die Steuereinheit (45) die Scheibenkupplung (3) ausrückt oder ein Splitgetriebe (12, 16, 15, 17) in Neutralposition setzt, die Steuereinheit (45) die Drehzahl des Motors (1) so steuert, dass die Eingangswelle (7) des Getriebes (9) faktisch drehmomentlos wird.

10. Automatisches Ausrückverfahren nach einem der Ansprüche 6 bis 9, wobei das Verfahren außerdem durch den Schritt **gekennzeichnet** ist, dass, nach dem Ausrücken des Abtriebs (32), die Steuereinheit (45) die Scheibenkupplung (3) zusammenkoppelt oder ein Splitgetriebe (12, 16, 15, 17) einrückt und ein vorher gewähltes oder ein neu gewähltes Gesamtübersetzungsverhältnis in dem Getriebe (9) einrückt.

11. Automatisches Ausrückverfahren nach einem der Ansprüche 6 bis 10, wobei das Verfahren außerdem durch den Schritt **gekennzeichnet** ist, dass die Steuereinheit (45) das Drehmoment der Eingangswelle (7) misst.

## Revendications

1. Procédé de mise en prise automatique d'une prise de force (32) qui dépend d'un accouplement, dans un véhicule, lorsque le véhicule est en mouvement, laquelle prise de force (32) est entraînée par un moteur (1), agencé dans le véhicule, via un embrayage à disque automatisé (3) qui à son tour est relié à une boîte de vitesses étagée automatique (9) dans laquelle un arbre intermédiaire (11) destiné à entraîner la prise de force (32) est agencé, où au moins une unité de commande (45) commande la boîte de vitesses (9), l'embrayage à disque (3) et le moteur (1), le procédé de mise en prise étant **caractérisé par** les étapes suivantes :
- l'unité de commande (45) enregistre que la mise en prise de la prise de force (32) est requise,
- l'unité de commande (45) libère l'embrayage à disque (3) et met la boîte de vitesses (9) dans une position neutre de sorte que l'arbre intermédiaire (11) de la boîte de vitesses (9) est libéré des roues menantes du véhicule,
- l'unité de commande (45) met en prise la prise de force (32).

2. Procédé de mise en prise automatique selon la revendication 1, où le procédé est en outre **caractérisé par** l'étape où, avant que l'unité de commande (45) ne libère l'embrayage à disque (3), l'unité de commande (45) commande le couple de sortie du moteur (1) de sorte que l'arbre d'entrée (7) de la boîte de vitesses (9) devienne virtuellement sans couple.

3. Procédé de mise en prise automatique selon la revendication 2, dans lequel le procédé est en outre **caractérisé par** l'étape où l'unité de commande (45) mesure le couple de l'arbre d'entrée (7).

4. Procédé de mise en prise automatique selon l'une quelconque des revendications précédentes, où le procédé est en outre **caractérisé par** l'étape où, avant que la mise en prise de la prise de force (32) ait lieu, l'unité de commande (45) s'assure que la vitesse de rotation de l'arbre intermédiaire (11) est réduite.

5. Procédé de mise en prise automatique selon l'une quelconque des revendications précédentes, où le procédé est en outre **caractérisé par** les étapes où, après mise en prise de la prise de force (32) l'unité de commande (45) accouple l'embrayage à disque (3) et met en prise un rapport total sélectionné précédemment ou nouvellement sélectionné dans la boîte de vitesses (9) après adaptation de la vitesse du moteur (1) à la vitesse sélectionnée.

6. Procédé de libération automatique d'une prise de force (32) qui dépend d'un accouplement, dans un véhicule, lorsque le véhicule est en mouvement, laquelle prise de force (32) est entraînée par un moteur (1) agencé dans le véhicule, via un embrayage à disque automatisé (3) qui à son tour est couplé à une boîte de vitesses étagée automatique (9) dans laquelle un arbre intermédiaire (11) destiné à entraîner la prise de force (32) est agencé, où au moins une unité de commande (45) commande la boîte de vitesses (9), l'embrayage à disque (3) et le moteur (1), le procédé de libération étant **caractérisé par** les étapes suivantes :
- l'unité de commande (45) enregistre qu'une libération de la prise de force (32) est requise,
- l'unité de commande (45) met la boîte de vitesses (9) dans une position neutre de sorte que l'arbre intermédiaire (11) de la boîte de vitesses (9) est libéré des roues menantes du véhicule,
- l'unité de commande (45) libère l'embrayage à disque (3) ou met un engrenage en deux pièces (12, 16, 15, 17) en position neutre,
- l'unité de commande (45) libère la prise de force (32).

7. Procédé de libération automatique selon la revendication 6, où le procédé est en outre **caractérisé par** l'étape où l'unité de commande (45) mesure le couple au niveau de la prise de force (32).

8. Procédé de libération automatique selon la revendication 6 ou 7, où le procédé est en outre **caractérisé par** l'étape où, avant que l'unité de commande (45) ne mette la boîte de vitesses (9) dans une position neutre de sorte que l'arbre intermédiaire (11) de la boîte de vitesses (9) soit libéré des roues menantes du véhicule, l'unité de commande (45) commande le couple de sortie du moteur (1) de sorte que l'arbre principal (10) de la boîte de vitesses (9) devienne sans couple ou virtuellement sans couple.

9. Procédé de libération automatique selon l'une quelconque des revendications 6 à 8, où le procédé est en outre **caractérisé par** l'étape où, avant que l'unité de commande (45) ne libère l'embrayage à disque (3) ou ne mette un engrenage en deux pièces (12, 16, 15, 17) dans une position neutre, l'unité de commande (45) commande la vitesse du moteur (1) de sorte que l'arbre d'entrée (7) de la boîte de vitesses (9) devienne virtuellement sans couple.

10. Procédé de libération automatique selon l'une quelconque des revendications 6 à 9, où le procédé est en outre **caractérisé par** l'étape où, après libération de la prise de force (32), l'unité de commande (45) accouple l'embrayage à disque (3) ou met en prise un engrenage en deux pièces (12, 16, 15, 17) et met en prise un rapport total sélectionné précédemment ou nouvellement sélectionné dans la boîte de vitesses (9).

11. Procédé de libération automatique selon l'une quelconque des revendications 6 à 10, où le procédé est en outre **caractérisé par** l'étape où l'unité de commande (45) mesure le couple de l'arbre d'entrée (7).
